# EUROPEAN PATENT APPLICATION

(11) **EP 4 679 389 A1**
(43) Date of publication of application: **14.01.2026**
(21) Application number: 25175983.3
(22) Date of filing: 05.06.2025
(51) Int. Cl.: G07C 1/24, G06V 20/52, G06V 30/00

(54) **SYSTEM AND METHOD FOR JUDGING AT LEAST ONE COMPETITOR PASSING OVER A JUDGING LINE**

(30) Priority: 08.07.2024 EP 24187030
(71) Applicant: Swiss Timing Ltd, 2606 Corgémont (CH)
(72) Inventor: WENGER, Lucas, 2735 Champoz (CH); DE ALMEIDA, Tiago, 1588 Cudrefin (CH); RICHARD, Pascal, 2606 Corgémont (CH)
(74) Representative: ICB SA

(57) **Abstract**

The invention relates to a system and a method for judging at least one competitor as he crosses a judging line, such as a finishing line (50), of given width, the system comprising at least one camera (10, 20) for taking photo-finish images, disposed aligned with the judging line, the system comprising at least one video camera (30) disposed above the judging line.

## Description

### Field of the invention

The invention relates to the field of determining data such as position, posture and/or time of at least one competitor on a judging line in a sports competition for judging the ranking of the competitors.

The invention relates more particularly to a system and a method for judging at least one competitor as he passes over a judging line, such as a finish line, by means of photo-finish cameras, also called line-scan sensor.

The system and method according to the invention are intended in particular, but not exclusively, for use in all types of sports competitions.

### Background of the invention

The technique of photo-finish images is commonly used in sports competitions to judge the order of finish of competitors.

Photo-finish images are currently judged manually by an operator. The operator places a vertical line on the image corresponding to the first pixel of the object/competitor to be judged and then enters the competitor race number recorded on the image to identify the competitor. However, these operations, and in particular the placement of the vertical line, are time-consuming, and can be particularly long, tedious and difficult for certain sports competitions, such as road cycling, when judging has to be carried out on a peloton. Added to this problem is the fact that it is not always easy to identify the competitor, as the race number is not always legible or is difficult to see on the photo image due to the angle of view. To overcome this problem of identification, some competitions use systems for the identification of competitors (transponders). However, it can happen that the information is missing, for example after a change of equipment, such as a change of bike during the event, or is inaccurate (lack of information on the competitor's position across the finish line).

The invention aims to remedy these problems by proposing a system and a method for judging at least one competitor as he passes over a judging line, such as a finish line, making it possible to obtain quickly and accurately all the data (position or posture of the object or competitors to be judged, identification of the competitor) and thus to quickly establish an accurate judgement of the arrival of the competitors.

### Summary of the invention

To this end, the invention proposes a method for judging at least one competitor as he crosses a judging line, such as a finish line, of given width, the method comprising a step of capturing images of the judging line comprising (i) taking photo-finish images by means of at least one camera for taking photo-finish images disposed in alignment with the judging line, and (ii) taking views by means of at least one video camera disposed above the judging line, the method comprising a step of generating an image relating to a photo-finish image enhanced by including a vertical line corresponding to the judging line of the competitor to be judged.

In other embodiments:
- the step of generating comprises the definition in an image created of a reference point in the vicinity of the competitor to be judged;
- the step of generating comprises the analysis in this image created of columns of pixels contained in an analysis zone being defined between the reference point and the competitor to be judged by being comprised between two lines extending on either side of the horizontal time axis starting from the reference point, these two lines having an angular separation of at least 45 degrees;
- the step of generating comprises the detection of a variation in the light intensity received by at least one pixel of one of the columns of pixels contained in the analysis zone, referencing said column as a judgement line;
- the step of generating comprises a creation of the image based on at least one photo-finish image provided by the first and/or second cameras;
- the step of generating comprises the modification of the image created to obtain the photo-finish image enhanced by placing in it a vertical line corresponding to said judgement line;
- the method comprises a step of calibrating the third camera with the first and second cameras from set of point correspondences between these cameras with respect to the finish line;
- the method comprises a step of detecting the competitor crossing the finish line;
- the step of detecting comprises a sub-step of generating identification data of each competitor having passed the finish line based on the processing of data relating to the view recorded by the video camera, carried out by the integrated artificial intelligence and OCR modules of the third video camera;
- the step of detecting comprises a sub-step of generating position data of each competitor having passed the finish line based on a correlation processing of data relating to images of the finish line captured by the first and second cameras and data relating to views recorded by the third video camera.

According to another aspect, the invention also proposes a system for judging at least one competitor as he crosses a judging line, such as a finishing line, with defined width, the said system comprising at least one camera for taking photo-finish images, disposed in alignment with the judging line, the system comprising at least one video camera disposed above the judging line.

Thus, thanks to the presence of a video camera and its arrangement with the photo-finish camera, all the information necessary to identify the competitor(s) is obtained automatically and accurately. A judgement can therefore be made more quickly.

Advantageously, the camera for taking photo-finish images and the video camera are cameras calibrated with respect to each other in relation to the width of the judging line.

Advantageously, the video camera is centred with respect to the width of the judging line.

Advantageously, the video camera is located in a vertical plane perpendicular to the judging line.

Advantageously, the system comprises a first and a second cameras for taking photo-finish images disposed on either side of the judging line, in alignment therewith. In this embodiment, the video camera is arranged at the same distance from the first and second cameras for taking photo-finish images.

Advantageously, the camera for taking photo-finish images and video camera are arranged so as to have respectively an optical axis directed towards the judging line on the one hand, and arranged with respect to each other so as to have a distinct viewing angle on the other hand.

### Brief description of the drawings

The present invention will be described subsequently in more detail with reference to the attached drawing, given by way of examples, but in no way limited thereto, in which:
- Figure 1 shows a schematic view of a finish arch comprising a system for judging competitors crossing a finish line, according to embodiments of the invention;
- Figure 2 shows a synoptic diagram of the step of generating an image relating to a photo-finish image enhanced involved in automatically determining the ranking of competitors, according to the embodiments of the invention;
- Figure 3 shows a schematic view of a photo-finish image enhanced listing the data used to establish the rankings of the competitors as shown in Figure 2, according to the embodiments of the invention, and
- Figure 4 represents a flowchart related to a method for judging at least one competitor as he crosses a judging line, according to the embodiments of the invention.

### Detailed description of the invention

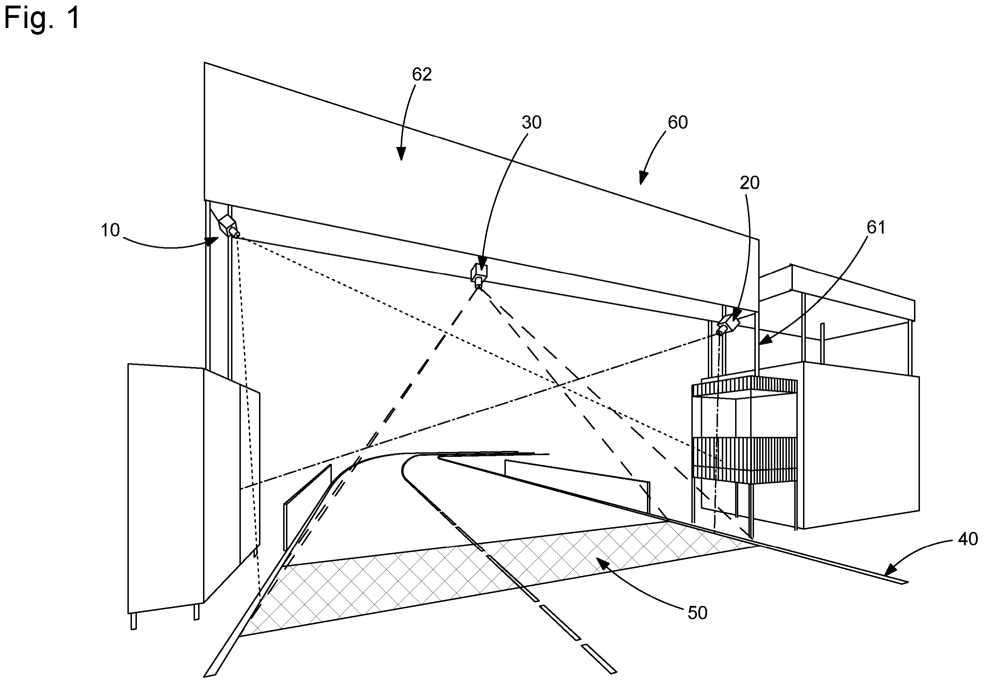

With reference to Figure 1, a system is described for judging at least one competitor as he crosses a judging line, such as a finish line 50, of given width as part of a route/circuit/path/road sport competition 40. This finish line 50 is preferably rectangular in shape and is comprised in a horizontal plan. This finish line 50 is perpendicular to this road 40.

In the example shown, the system comprises an arrangement of three cameras 10, 20, 30 mounted on a gantry 60 defining the finish line of the competition, two of the cameras being photo finish cameras 10, 20 and a video camera 30. Of course this is an example, as the number of cameras and the way they are mounted may differ according to the location of the sporting competition, the equipment in place at the judging line and/or the type of sporting competition. In particular, a system may be provided comprising a single camera for taking photo-finish images associated with one or more video camera(s), or a plurality of cameras for taking photo-finish images associated with one or more video camera(s).

Hereinafter, the cameras 10, 20 for taking photo-finish images will be defined as respectively the first camera 10 for taking photo-finish images and the second camera 20 for taking photo finish-images, and the camera 30 video will be defined as the third camera 30 video. In this context, the third camera 30 which is a video camera, is positioned between the first and second cameras 10, 20. This third camera 30 is placed equidistant from the first and second cameras 10, 20.

The first and second cameras 10, 20 for taking photo-finish images are arranged on either side of the finish line 50, in alignment with the finish line 50. Each camera 10, 20 of these two cameras 10, 20, is positioned above a narrow area/zone adjoining one of the two ends of this finish line 50. Each camera of these two cameras 10, 20 is positioned directly above one of the two ends of this finish line 50. Each narrow zone/area bounds or limits one of the two ends of this line. This narrow zone can be a line. In the example shown, the first and second cameras 10, 20 are mounted on the vertical uprights 61 of the gantry 60.

The first and second cameras 10, 20 are oriented towards the finish line 50 such that the optical axis of each of the cameras is substantially aligned with said line. The field of view of each of these cameras is shown in Figure 1 and corresponds to the area bounded by the ground and by the dashed lines extending from the first and second cameras 10, 20.

The third video camera 30, which is advantageously a high-speed camera, is positioned above the finish line. This third video camera 30 is preferably positioned directly above this finish line. In the example shown, it is attached to the upper part 62 of the gantry 60 connecting the vertical uprights 61. Like the first and second cameras 10, 20, the third camera 30 is oriented so that its optical axis is directed towards the finish line.

The third camera 30 is advantageously positioned centrally in relation to the width of the finish line 50. It is preferably located in the vertical plane passing through the finish line 50. In other words, this vertical plane comprises the longitudinal axis of symmetry of this finish line 50. It can be understood here that this vertical plane is preferably perpendicular to this finish line 50 or to the horizontal plane including this finish line 50. This third camera 30 is preferably located in the vertical plane passing in the middle of the width of the finish line 50. This vertical plane is perpendicular to the finish line 50

It can be noticed that the first, second and third cameras 10, 20, 30 can be located in this vertical plane.

As we said before, the first and second cameras 10, 20 can be disposed substantially equidistant from the outer edge of the finish line 50 to which they are respectively closest, the third camera 30 being disposed equidistant from the first and second cameras 10, 20.

In the example shown, the first and second cameras 10, 20 are positioned at the same height from the ground for taking images. The third camera 30 is preferably positioned higher than the first and second cameras 10, 20.

Advantageously, the third camera 30 includes an artificial intelligence module for detecting competitors as they cross the finish line.

Advantageously, the third camera 30 also includes an OCR (Optical Character Recognition) module for optical recognition of the race numbers of the competitor detected. Alternatively, the third camera 30 can be equipped with only the OCR module (camera without artificial intelligence module).

The position of the competitors detected as they cross the finish line is determined from the images of the finish line taken by the first and second cameras 10, 20 photo-finish and the third camera 30 video from different angles. For this purpose, the cameras have been previously calibrated in order to establish points of correspondence between the third video camera 30 and the first and second photo-finish cameras 10, 20 with respect to the width of the finish line in relation to the finish line.

The system further comprises a processing unit (not shown) connected to each of the cameras 10, 20, 30. The photo-finish images taken by the cameras 10, 20 and the information recorded by the third camera 30 (detection of the competitors, reading of the race numbers and determination of the position of the competitors on the finish line) are transmitted to the processing unit for allowing establishment of judgment.

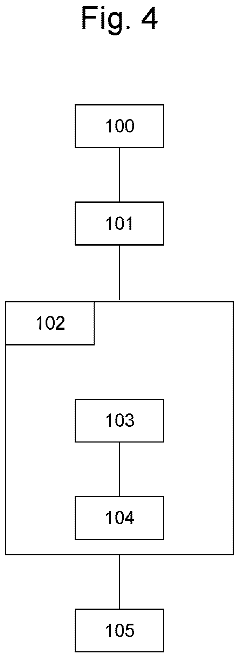

With reference to Figure 4, the method implemented by means of the system below described, comprises a step of capturing 100 images of the finish line comprising (i) photo-finish images taken by means of the first and second cameras 10, 20 and (ii) views taken by means of the third video camera 30.

Prior to capturing the images, the method comprises a step of calibrating 101 the third camera 30 with the first and second cameras 10, 20 from set of point correspondences between these cameras 10, 20, 30 with respect to the finish line. This operation for calibrating defining the intrinsic and extrinsic parameters of these three cameras, can be carried out using linear or iterative methods, during which the system converges on an appropriate calibration solution.

The method then includes a step of detecting 102 competitors passing the finish line also called the judging line. This step 102 is able to generate data relating to each competitor having passed the finish line such position data, identification data and race number data of this competitor. This step 102 comprises:
- a sub-step of generating 103 identification data of each competitor having passed the finish line based on the processing of data relating to the view recorded by the video camera, carried out by the integrated artificial intelligence and OCR modules of the third video camera 30;
- a sub-step of generating 104 position data of each competitor having passed the finish line based on a correlation processing of data relating to images of the finish line captured by the first and second cameras 10, 20 photo finish and data relating to views recorded by the third video camera 30.

Thus this step 102 contributes to detect the competitors crossing the finish line and then, once the competitors have been detected, the identification information (for example: race numbers, identity information, personal characteristics as age, height...) of the competitors crossing the finish line are automatically recognized.

The method comprises also a step of generating 105 an image relating to a photo-finish image enhanced by including a vertical line corresponding to the judging line of the competitors to be judged. This step 105 contributes to determine the exact position of each competitor along the width of the finish line and/or relatively to this line when they cross this line and thus to determine the exact order in which the competitors cross this line. This step 105 is implemented based on the identification data and the position data of each competitor having passed the finish line and also based on the photo-finish images provided by the first and second cameras 10, 20. Each photo-finish image is a numerical image preferably a raster image. This raster image is compiled using pixels, or tiny dots, containing unique color and tonal information that come together to create the image. Since raster images are pixel based by comprising a matrix of pixels, they are resolution dependent.

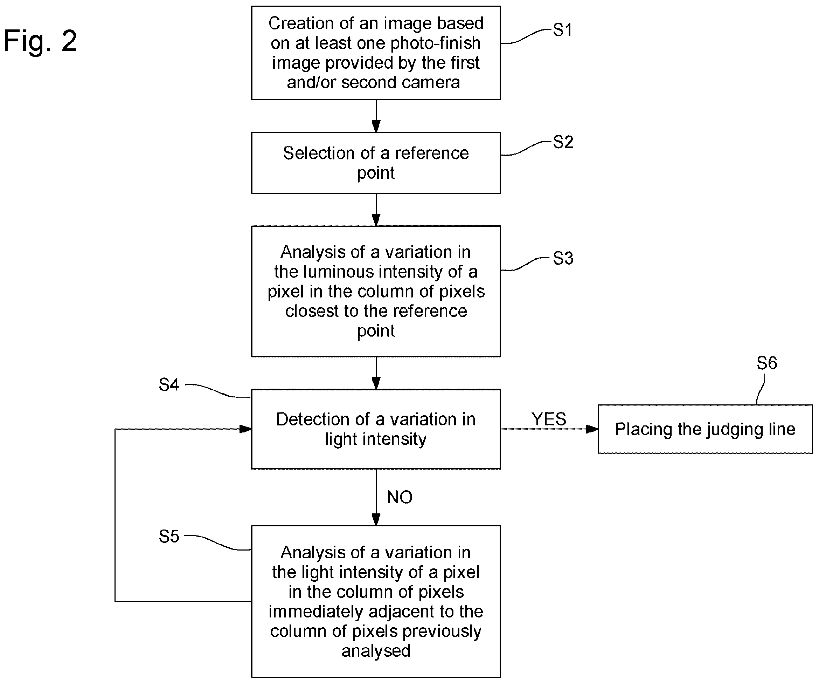

In reference to figure 2, this step of generating 105 comprises a sub-step of creating S1 an image based on at least one photo-finish image provided by the first and/or second cameras 10, 20. During this sub-step S1, the processing unit of the system creates this image in which the visible line will be placed:
- by selecting at least one photo-finish image among the photo-finish images captured by the first and/or second cameras 10, 20 and
- by constructing the said image from at least one photo-finish image selected.

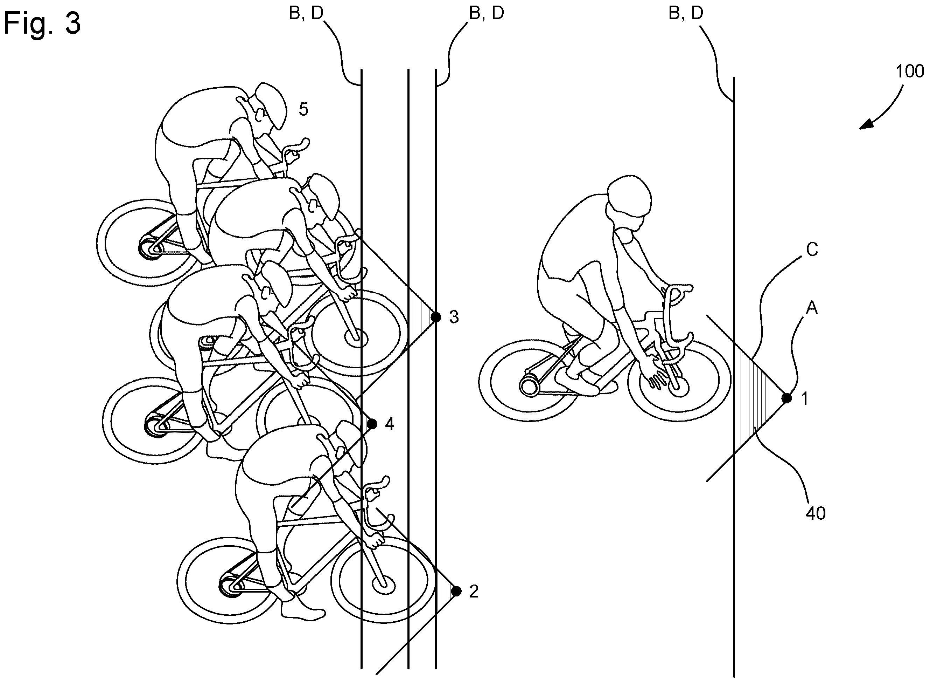

Afterwards, this step 105 comprises a sub-step of defining S2 in this image constructed a reference point A in the vicinity of the competitor to be judged. During this sub-step S2, a cursor is positioned on this image constructed. In the sub-step of defining S2, the reference point A is carried out automatically by the processing unit. This sub-step S2 of automatically defining this reference point A, is carried out on the basis of the image constructed and the identification data and position data of each competitor having crossed the finish line. The reference point A to be defined varies according to the sport and the type of competition. For example, the reference point will be set in relation to the front wheel of the bicycle in the case of a road bike race (as shown in Figure 3), in relation to the rear of the rear wheel in the case of an elimination race in track cycling, in relation to the torso in athletics, in relation to the first part of the body or the snowboard in snowboard cross, and so on.

Once the reference point A has been defined for each identified competitor, the processing unit carries out a search to identify in this image constructed, the first pixel of the competitor to be judged using a dedicated analysis module (sub-steps S3 to S6).

In this context, this step of generating 105 comprises a sub-step of analysing S3 columns B of pixels contained in a defined zone of the pixel matrix of this image constructed, called the "analysis zone", defined between the reference point A and the competitor to be evaluated/judged. The sub-step of analyzing S3 the columns of pixels B is carried out sequentially, pixel column by pixel column, starting from the reference point A and along the horizontal time axis, until a variation in light intensity is detected in one of the columns of pixels B.

This sub-step S3 comprises an operation of searching for the first pixel in the "analysis zone". This operation is preferably performed automatically. The analysis zone widens as the competitor to be evaluated is approached. According to a preferred embodiment, the analysis zone is comprised between two lines C extending on either side of the horizontal time axis starting from the reference point A. The two lines C delimiting the analysis zone are set so as to define an angular separation of at least 45 degrees or 90 degrees. In other words, these two lines C, called boundary lines C, have an angular separation of at least 45 degrees and preferably 90 degrees, as in the example shown in Figure 3. Advantageously, the boundary lines C are drawn symmetrically with respect to the horizontal time axis.

As we discussed before, the sub-step of analyzing S3 is performed sequentially, column B of pixels by column B of pixels, starting from the reference point A and following the horizontal time axis until a variation in light intensity is detected in one of the columns B of pixels. In the example shown, with the horizontal time axis pointing to the left, the analysis is performed from left to right, starting with the column B of pixels closest to the reference point, and "moving up" the columns B in the direction of the object/competitor.

For each column B of pixels, the pixels are analyzed over the height of the column bounded by the boundary lines C. For each column B analyzed, the light intensity received by each pixel in column B and any variations therein are analyzed.

The step of generating 105 comprises a sub-step of detection S5 of a variation in the light intensity received by at least one pixel of one of the columns of pixels B contained in the analysis zone, referencing said column B as a judgement line D. In this context, the analysis is stopped while the B column containing the pixel in question is referenced as judgement line D.

Afterwards, the step of generating 105 comprises a sub-step of modifying S6 the image constructed by placing in it a vertical line corresponding to said judgement line D.

In remarks, if no variation in light intensity is detected at the level of the B column being analyzed, the step of generating 105 comprises a sub-step of continuing the analysis S5. During this sub-step S5, the analysis module moves on to analyze the B column of pixels immediately adjacent thereto (in the example, the column to the left of the column just analyzed).

Fully automatic judgement is achieved by means of the camera arrangement just described and the implementation of the method described for automatically placing the vertical lines on the photo-finish images.

## Claims

1. Method for judging at least one competitor as he crosses a judging line, such as a finish line, of given width, the method comprising a step of capturing (100) images of the judging line comprising (i) taking photo-finish images by means of at least one camera (10, 20) for taking photo-finish images disposed in alignment with the judging line, and (ii) taking views by means of at least one video camera (30) disposed above the judging line, the method comprising a step of generating (105) an image relating to a photo-finish image enhanced by including a vertical line corresponding to the judging line of the competitors to be judged.

2. Method for judging according to the preceding claim, wherein the step of generating (105) comprises:
- defining (S2) in an image created a reference point (A) in the vicinity of the competitor to be judged;
- analyzing (S3) in this image created a columns (B) of pixels contained in an analysis zone being defined between the reference point (A) and the competitor to be judged by being comprised between two lines (C) extending on either side of the horizontal time axis starting from the reference point (A), these two lines (C) having an angular separation of at least 45 degrees;
- detecting (S5) a variation in the light intensity received by at least one pixel of one of the columns of pixels (B) contained in the analysis zone, referencing said column (B) as a judgement line (D).

3. Method for judging according to one of the preceding claims, wherein the step of generating (105) comprises a sub-step of creating (S1) the image based on at least one photo-finish image provided by the first and/or second cameras (10, 20).

4. Method for judging according to one of the preceding claims, wherein the step of generating (105) comprises a sub-step of modifying (S6) the image created to obtain the photo-finish image enhanced by placing in it a vertical line corresponding to said judgement line (D).

5. Method for judging according to one of the preceding claims, wherein it comprises a step of calibrating (101) the third camera (30) with the first and second cameras (10, 20) from set of point correspondences between these cameras (10, 20, 30) with respect to the finish line.

6. Method for judging according to one of the preceding claims, wherein it comprises a step of detecting the competitor (102) passing the finish line.

7. Method for judging according to the preceding claim, wherein the step of detecting (102) comprises a sub-step of generating (103) identification data of each competitor having passed the finish line based on the processing of data relating to the view recorded by the video camera (30), carried out by the integrated artificial intelligence and OCR modules of the third video camera (30).

8. Method for judging according to one of the preceding claims 6 and 7 wherein the step of detecting comprises a sub-step of generating (104) position data of each competitor having passed the finish line based on a correlation processing of data relating to images of the finish line captured by the first and second cameras (10, 20) and data relating to views recorded by the third video camera (30).

9. System for judging at least one competitor as he crosses a judging line, such as a finishing line (50), with defined width, the said system implementing the method according to preceding claims comprising at least one camera (10, 20) for taking photo-finish images, disposed in alignment with the judging line, the system comprising at least one video camera (30) disposed above the judging line.

10. System for judging at least one competitor according to claim 9, **characterized in that** the camera (10, 20) for taking photo-finish images and the video camera (30) are cameras calibrated with respect to each other in relation to the width of the judging line.

11. System for judging at least one competitor according to claim 9 or claim 10, wherein the video camera (30) is centered with respect to the width of the judging line.

12. System for judging at least one competitor according to one of the preceding claims 9 to 11, wherein the video camera (30) is located in a vertical plane perpendicular to the judging line.

13. System for judging at least one competitor according to any of the preceding claims 9 to 12, wherein it comprises a first and a second cameras (10, 20) for taking photo-finish images disposed on either side of the judging line, in alignment therewith.

14. System for judging at least one competitor according to any of the preceding claims 9 to 13, wherein the video camera (30) is arranged at the same distance from the first and second cameras (10, 20) for taking photo-finish images.

15. System for judging at least one competitor according to any of the preceding claims 9 to 14, wherein the camera (10, 20) for taking photo-finish images and the video camera (30) are arranged so as to have respectively an optical axis directed towards the judging line on the one hand, and arranged with respect to each other so as to have a distinct viewing angle on the other hand.
